# EUROPEAN PATENT SPECIFICATION

(11) **EP 2 291 088 B1**
(45) Date of publication and mention of the grant of the patent: **14.11.2012**
(21) Application number: 09773827.2
(22) Date of filing: 30.06.2009
(51) Int. Cl.: A23L 1/214, A23B 7/00, A23L 1/212

(54) **METHOD FOR PREPARATION OF A STORAGE STABLE ONION FIBER**
VERFAHREN ZUR HERSTELLUNG EINER LAGERSTABILEN ZWIEBELFASER
PROCÉDÉ POUR LA PRÉPARATION D UNE FIBRE D OIGNON STABLE AU STOCKAGE

(30) Priority: 30.06.2008 SE 0801548
(43) Date of publication of application: 09.03.2011
(73) Proprietor: Rivulet AB, 37493 Karlshamn (SE)
(72) Inventor: RALVERT, Klas, 224 67 LUND (SE)
(74) Representative: Jakobsson, Jeanette Helene
(86) International application number: PCT/SE2009/000344
(87) International publication number: WO 2010/002312

(56) References cited:
- EP-A1- 0 582 050
- GB-A- 1 254 910
- GB-A- 2 234 661
- NONAKA KYOKO: "Method for producing onion perilla ferment pickle", EPODOC, 1 February 2007 (2007-02-01), XP002650944, [retrieved on 2007-02-01] & JP 2007 020546 A (NONAKA KYOKO) 1 February 2007 (2007-02-01)
- BARBARA BISAKOWSKI ET AL: "Effect of lactic acid fermentation of onions (Allium cepa) on the composition of flavonol glucosides", INTERNATIONAL JOURNAL OF FOOD SCIENCE AND TECHNOLOGY, vol. 42, no. 7, 1 July 2007 (2007-07-01), pages 783-789, XP55002770, ISSN: 0950-5423, DOI: 10.1111/j.1365-2621.2006.01268.x
- Jun-Ichi Horiuchi ET AL: "Effective onion vinegar production by a two-step fermentation system", Journal of Bioscience and Bioengineering, 19 December 2000 (2000-12-19), pages 289-293, XP55002989, Retrieved from the Internet: URL:http://www.aseanfood.info/Articles/110 13415.pdf [retrieved on 2011-07-18]
- J Karovicova ET AL: "Organic acids production by lactic acid fermentation of vegetables (green pea and onion)", Die Nahrung, 19 October 2006 (2006-10-19), pages 500-502, XP55002996, Retrieved from the Internet: URL:http://onlinelibrary.wiley.com/store/1 0.1002/food.19920360514/asset/19920360514_ ftp.pdf?v=1&t=gq9htty6&s=cf673ade7bff3c4d5 51f7fabe84ba5693ccc1ea9 [retrieved on 2011-07-18]
- DATABASE WPI Week 200278, Derwent Publications Ltd., London, GB; AN 2002-715489, XP003026028 & JP 2002 119238 A (TOYO SHINYAKU KK) 23 April 2002
- DATABASE WPI Week 200409, Derwent Publications Ltd., London, GB; AN 2004-085678, XP003026027 & JP 2004 008167 A (TOYO SHINYAKU KK) 15 January 2004
- ROBERTS J.S. ET AL: 'Lactic acid fermentation of onions' LEBENSM.-WISS. U-TECHNOL. vol. 38, 2005, pages 185 - 190, XP004608965

## Description

### Field of the invention

The present invention relates to a process for the production of a storage stable onion fibre mixture from onion.

### Technical background

Flavour materials from vegetable start materials, such as e.g. onion, are frequently occurring in the food industry. The onion flavour as such is extremely complex as a number of volatile substances contribute to the characteristic onion flavour.

Flavour additive materials of e.g. frozen onion according to state of the art, which are used when producing food products, especially processed meat products, have the disadvantage that the onion when being used has softened and forms a turbid sludge when mixed in water, and that the onion additionally has lost a great deal of its hydrophilic ability and flavour. Inter alia this depends on the fact that the cell structure is broken down during freezing due to the expansion of water. The break-down renders enzymes to be released and also hydrolysis of glycoside bonds. This gives the formation of volatile onion agents which on one hand migrates slowly out from the onion, on the other hand oxidizes, which gives a flavour loss. Living cells contain barriers between enzymes and substrate, but these barriers are broken down when cells are damaged, e.g. when onion is chopped.

When onion is dried a great part of the water in the onion is removed, and one then also loses a great amount of ethereal oils, which gives a flavour change. Fresh onion has the disadvantage that it may not be used in for example the processed meat industry due to its microbiological status.

In other words, there exist problems with both the frozen and the dried onion (powder and granulates) when used as flavour additive materials. In some cases the problems are related to the actual properties of the end product, which is the case for both the frozen and the dried onion, but in other cases there also exist disadvantages for the actual production of these onion processed products. For example drying of onion is an energy demanding method, which is costly and gives a comparatively high price on dried onion.

A traditional method of preserving vegetables is fermentation. EP0582050A1 discloses a process for preparing a flavouring agent in which a lovage extract is mixed with an onion extract, a sugar and, where necessary, water. The mixture is then subjected to a lactic fermentation carried out at a temperature of between 30 and 40°C, until a pH of the order of 3.5 to 4.5 is obtained. Finally, the fermented mixture is subjected to a heat treatment to inactivate the microorganisms present and to permit the development of a Maillard reaction between the proteins and sugars present in the fermented mixture.

XP002650944 ("*Method for producing onion perilla ferment pickle*" (NONAKA KYOKO)) discloses a method for producing onion perilla ferment pickles, comprising vertically cutting an onion into 6 divisions, adding salt and vinegar to the onion followed by stirring, squeezing moisture followed by further adding sugar and flavor broth powder, and adding the perilla ferment liquid to the product after a fixed period.

In *"*Effect of lactic acid fermentation of onions (Allium cepa) on the composition of flavonol glucosides" (Bisakowski et al, International Journal of food science and technology, vol. 42, no. 7, 1 July 2007) it is disclosed the fermentation of red onions inoculated with *Lactobacillus plantarum* 51 (starter treatment), which results in acid production to pH 4.5, after 48 h of incubation at 19°C, which has proven to be adequate for proper preservation. In the presence of erythromycin (starter + antibiotic), acidification to pH 5.2 resulted, which was similar to that of the uninoculated control.

GB2234661A discloses a method of fermenting vegetables, where vegetables, such as cabbage, are admixed 3 to 5% by weight of salt and 2 to 5% by weight of water-binding agent and are fermented under substantially anaerobic conditions at a temperature of from 14 to 20°C.

A problem with the fermentation processes is that additives are used for the fermentation of vegetables and onion mixtures. In some cases, only salt is used, but in most cases, at least one fermentation medium or bacteria strain or yeast is used together with salt, brine and/or sugar.

The present invention aims at solving these problems by the provision of a process by which an onion product which is natural, i.e. without additives, and which has a good flavour profile may be produced, and which process causes a very small energy need.

### Summary of the invention

The object according to the present invention is achieved by a process for the production of a storage stable onion fibre mixture from onion, comprising the steps of:
- dry removal and sorting-away of soil, stones, defect material and any other contaminants and foliage from onions;
- washing and peeling of the onions in a washer/onion peeler;
- disintegration of the onions to a mixture comprising small onion fibres which have intact fibre structure and onion juice in an onion disintegrator;
- separation of 15-55% onion juice based on total weight of fresh onion input from the mixture in an onion fibre dewater device for the production of an onion fibre mixture; and
- fermentation of the onion fibre mixture in at least one fermentor to a pH-value between 3.5 and 4.5 for the production of a storage stable onion fibre mixture and optionally fermentation of the separated onion juice in at least one separate fermentor to a pH-value between 5 and 6.
wherein the process is performed naturally without additives

### Short description of the drawing

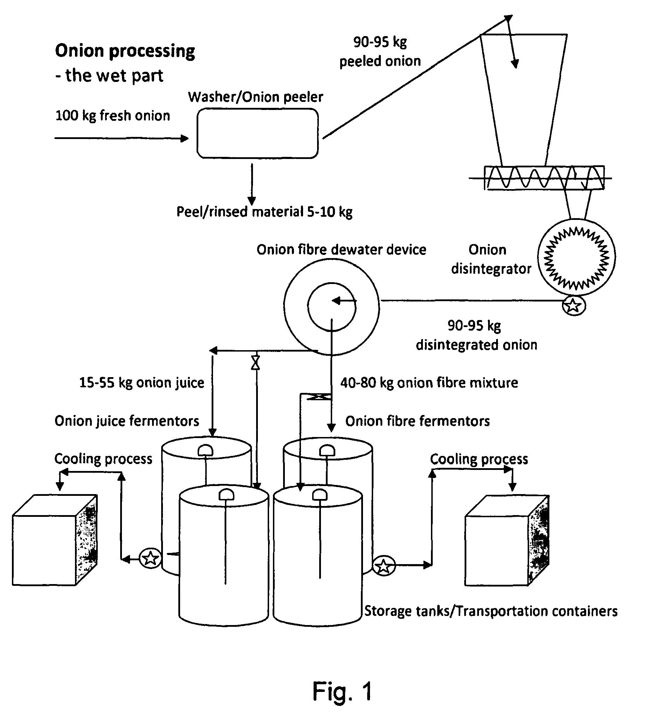

Fig 1 shows a process chart for the processing of fresh onion to an onion fibre mixture and onion juice according to one embodiment of the present invention. The specified weight ratios can of course vary depending on the amount of fresh onion which is fed and the used equipment may be configured and adjusted with respect to the processed amounts and wanted conditions.

### -*Detailed description of the invention

As mentioned above, an onion fibre mixture which has enhanced properties in comparison with other onion flavour additive materials may be produced according to the present invention. The positive properties of the onion fibre mixture are inter alia the enhanced water binding property, the improved and prolonged stability in storage, the enhanced flavour intensity with preserved flavour profile during long storage and improved texture. Furthermore, the process for the production of such an onion fibre mixture is performed naturally without additives and in a non-energy demanding way, as such optimal from a climate perspective.

With onion fibre mixture is herein meant a mixture of onion fibres where the ratio of water insoluble fibres to water soluble fibres is higher than in the vegetable start material, such as fresh onion. Synonymous with onion fibre mixture, onion fibre material is used in the detailed description below.

Due to the fact that the process according to the present invention only comprises process steps which do not demand much energy, the process as such is climate optimal and cheap in comparison with other processes for the processing of onion to different flavour additive materials, such as frozen and dried onion.

The process according to the present invention is normally performed on fresh onion, but onion which has been stored a while and is not harmful for the fresh onion after harvesting is also fully possible to use in the production process according to the present invention.

The dry matter of the onion varies depending on the type, where cultivation has been made and if the onion is processed directly after harvest or is stored. Swedish and Scandinavian onions normally have a dry matter of 13-15 percent at the time of harvest and then lose 1-3 percentage units as storage may last up to 6 months. In Example 1 below table 1 is shown with exemplified dry matters of different fractions during the processing according to one embodiment of the present invention. In some countries with appropriate climate onions may be cultivated with a dry matter content of up to 20 percent, and such onion is of course also possible to use according to the present invention. In such a case also the dry matter contents may of course be different from those recorded as examples in table 1.

According to the process according to the present invention, the fresh onion, which thus may have been stored firstly up to 6 months, is firstly dry separated from soil remainders, stones and other contaminants, and foliage is removed. Defect material is also sorted away. Thereafter the onion is washed clean and peeled before it enters the actual process for the production of the flavour intensive onion fibre or the onion fibre mixture. In the onion fibre process, the onion is disintegrated into small fibre parts. By disintegrating to small fibre parts, the fibre structure of the onion is not destroyed, but a much greater free surface is liberated for the flavour components of the onion. During this step it is of importance not to disintegrate too vigorously so that a homogenized sludge is formed, as the fibre structure and the texture as such have been destroyed, which by that causes the removal of the onion juice not being possible to perform as desired. Furthermore, the disintegration may not be performed so modest so that a too large part of the onion juice still is maintained inside of the fibre structure and therefore may not be removed during the separation, which restrains fermentation and by that the stability in storage. To summarize, by disintegration to small fibre parts according to the present invention the flavour components are not liberated, and the texture and the fibre structure in the onion are not destroyed, which in turn implies that the flavour components in its further contact with a foodstuff during a subsequent food application obtain much larger possibility to penetrate into the foodstuff.

After the disintegration, the onion fibre is concentrated to desired consistence or structure by removal of desired amount of onion juice which also contains soluble fibres. In other words, parts of the liquid components of the onion are liberated when the onion is disintegrated to smaller parts, which, after separation of these, creates conditions for a natural preservation of the end product of the onion fibre mixture and as such long shelf life. The magnitude of this separation may vary with reference to desired product specification, and it is totally possible to produce onion fibre mixtures which have higher or lower share of water soluble fibres and onion juice. According to one specific embodiment of the present invention, the separation of onion juice from the mixture comprising small onion fibres which have intact fibre structure and onion juice is performed so that the proportion of dry matter in the onion juice becomes 7-10 weight% and the proportion of dry matter in the onion fibre mixture becomes 11-16 weight%, when yellow onion is used which in a dry rinsed, unwashed and unpeeled state has a proportion of dry matter of 11-15 weight%. According to the present invention, the separation of onion juice from the mixture comprising small onion fibres which have intact fibre structure and onion juice is performed so that 15-55% onion juice is separated away based on total weight of fresh onion input. This implies that if total fresh onion input constitutes 100 kg, then 15-55 kg onion juice is separated away, which is shown in the example of fig 1.

The main control factor for water binding properties of the vegetable start material is the amount and type of fibre present in the start material. According to the present invention it has been shown that an increased ratio of insoluble fibre to soluble fibre in the fibre material in comparison with the unprocessed start material, such as unprocessed fresh onion, gives a better water binding ability, for example in comparison with deep-frozen chopped onion and dried onion, and also that a better preserved flavour and texture is obtained. The ratio of insoluble fibres to soluble fibres is affected according to the present invention by the separation which is made on onion juice and onion fibre, where a greater part of the soluble fibres follow the onion juice. By in such a way concentrating the amount of insoluble fibres in the onion fibre mixture, which fibres additionally must be kept intact during processing and disintegration, the water binding property is as such increased essentially in comparison with the non-separated mixture of onion fibres and onion juice. Some soluble fibres may of course also follow the onion fibre mixture, but it is important that this amount is kept down according to desired level. Furthermore, desired level of dry matter in the onion fibre mixture may vary, which may be regulated by varied level on the separation of onion juice from the mixture comprising onion fibres and onion juice. One should realize that the separation of onion juice from the mixture in no way have to be made completely, and fact is that the onion fibre mixture very possibly also may contain parts of onion juice after separation. Separation of onion juice is made with reference to wanted end product of onion fibre mixture.

The processing conditions for the different steps according to the present invention may be varied. The fermentation is however a very important step for the possibility to lower the pH-value of the onion fibre mixture and as such increase the stability in storage, and it is very important that this fermentation is performed with pH-control. The pH-value of the disintegrated fresh onion, i.e. onion fibre and onion juice, is about 6 (pH-value 5-7). The fermentation shall be performed in conditions which allow the pH-value of the onion fibre fraction to be lowered from pH-value 6 to a pH-value between 3.5 and 4.5. The low pH-value of the fibre mixture decreases the risk for unwanted growth of bacteria, moulds etc. on the product. Furthermore, if a similar fermentation also is performed on the onion juice, the pH-value of the onion juice should at least be lowered, i.e. to a level with a pH-value between 5 and 6. If the input onion has a somewhat lower pH-value than 6, the optional fermentation of the onion juice shall of course be made to a pH-level which at least is lower than the pH-value of the input onion.

According to one specific embodiment of the present invention, the fermentation of the onion fibre mixture and/or the fermentation of the separated onion juice is performed in a temperature of between 15°C and 30°C, such as between 20°C and 30°C, e.g. about 25°C. Hence, a temperature down to e.g. 15°C also works according to the invention, but then a longer fermentation time is needed.

According to another specific embodiment, the fermentation of the onion fibre mixture and/or the fermentation of the separated onion juice each is performed from 15 hours to 30 hours, such as about one day and night. If a temperature down to 15°C is used, a fermentation time of up to two days and nights is needed.

According to yet another embodiment of the present invention, the fermentation of the onion fibre mixture is performed to a pH-value of between 3.8 and 4.5 and/or the fermentation of the separated onion juice is performed to a pH-value of between 5 and 5.5. For normal process conditions for the fermentation according to the present invention, the pH of the onion juice lies in the higher part of the range, such as at about 5.4-5.5.

The fermentation may be performed with different types of equipment and in different ways. For example, the fermentation may be performed in so called fermentation vessels, where this is made either in a vessel or a container for the onion fibre mixture and the onion juice, respectively, or where several vessels are used in a system. The fermentation may be made batch wise, semi-batch wise or completely continuously. Furthermore, the fermentation should be able to be made during transportation and does not have to occur directly after separation of onion juice and onion fibre mixture. The important thing is that the basis and conditions for the fermentation are the right ones. With reference to this, it should also be pointed out that the pH-values stated in this description as limits for the fermentations of onion juice and onion fibre mixture, respectively, should be seen as mean values for a whole mixture. It is e.g. completely possible to perform the fermentation by filling a container during some time, such as e.g. 12 hours, and then allow the mixture to ferment for another 12 hours and then pump out the fermented mixture for the feeding of it to the cooling process or where the mixture is cooled directly in the used container. If the temperature is the right one for fermentation already from the beginning, this implies that the fermentation dwell time for different parts of the mixture will vary. Therefore, both fermentation times as well as pH-values stated in this description should be regarded as mean values for e.g. one batch which is fermented.

The fermented onion fibre mixture is suitably cooled after the fermentation and is then stored at a cooled temperature. According to one specific embodiment, the storage stable onion fibre mixture (end product) and/or the separated onion juice are therefore cooled after fermentation to a temperature of between 2°C and 10°C, which also is a suitable storage temperature. This cooling may be made in the same vessel as the fermentation, e.g. if this vessel is equipped with cooling possibility, such as e.g. jacket cooling, during transportation to a storage container, in the storage container itself or in fact in a transportation container. One example is shown in fig 1 where the actual cooling process is located after the fermentation vessels and in connection with the storage tanks or the transportation containers. The cooling step is important for the fermentation to decay, which otherwise does not occur, and as such enable for long storage time of the onion fibre mixture and the onion juice. If the fermentation process should be allowed to continue uncontrolled at a too high level too long, then the pH-value sinks to a too low level, which implies that the energy content of the mixture is consumed and that the fermentation process stops and total amount of bacteria in the onion fibre mixture once again rises and the product becomes unsuitable as a food raw product. pH-values down to close to 3.5 for the onion fibre mixture are normally not desirable as a sourish smell and flavour then may be obtained. It is however important to point out that the onion fibre mixture in itself still is very stable and may be stored in at least a week and surely a number of weeks in room temperature after the fermentation and still keep a desired pH-value. To prolong the shelf life, cooling is however necessary to stop the fermentation.

The fermented onion fibre mixture and the fermented onion juice which are produced according to the present invention are further easy to handle and user rational and may normally be dosed with ease. This is of course also valid after storage and cooling and during further use in different food applications, such as e.g. for the production of processed meats. If a very great amount of onion juice has been removed so that the onion fibre mixture is very concentrated, the onion fibre mixture on the other hand may be difficult to pump. In the process it may in some cases according to the present invention be suitable to recirculate a part of the fermented onion juice to the inflow of onion. This to make the flow more easily pumpable, which renders that the dosage in the process may be controlled more exactly. According to one specific embodiment of the present invention, a certain amount of the separated onion juice is therefore recirculated, after fermentation to a pH-value between 5 and 6, to the inflow of washed and peeled onion or the mixture comprising small onion fibres, after the step of washing and peeling of the onions in a washer/onion peeler and before the step of separation of at least a part of the onion juice from the mixture in an onion fibre dewater device for the production of an onion fibre mixture. As is evident from above, the fermented onion juice may be recirculated somewhere in the process between after washing and peeling of the onion and up to the actual separation of onion juice. The screw pump equipment after the onion disintegrator shown in fig 1 is of course a suitable place to recirculate the fermented onion juice to. After this step the mixture comprising small onion fibres should be pumped to the dewatering and it may as such be preferable that fermented onion juice has been added to the mixture to make this more easily pumpable. Furthermore, the recirculated fermented onion juice may be flown through a heat exchanger before it is redosed in the process, which may be of interest to control the temperature in the process. As an example it may be stated that heat exchange is made of the onion juice so that the onion fibre mixture gets a temperature of between 15-30°C.

In general with reference to the process according to the present invention it should be said that this may be performed in an environment where oxygen is present, such as in air, but that inert environments may be preferable. For example, the process may be performed in nitrogen, in an environment deficient in oxygen or in vacuum. Inert environments may be preferable as the onion fibre gets a light yellower colour, while in environments rich on oxygen the onion fibre is exposed to an oxidation and as such becomes darker in colour.

As shown in fig 1, two fermentors may be installed for both the fermentation of the onion fibre mixture and the onion juice. According to one specific embodiment of the present invention, the fermentation of the onion fibre mixture and/or the fermentation of the onion juice each is performed in at least two fermentors each for secure continuous fermentation. As an example, the onion fibre mixture may be fermented about 24 hours in a temperature of about 25°C and the pH-value then decreases from about 6 to 4. If the onion juice undergoes the same fermentation process, the pH-value decreases to about 5-5.5. Hence, the onion juice does not reach the same pH-value as the onion fibre and is as such more difficult to store over time and therefore demands a more stable temperature storage and cool handling out to the customer.

Hence, it is not only the concentrated onion fibres which are a product obtained in the process according to the present invention, but also the onion juice may be taken care of and used. The process concept according to the present invention where onion is the base in the production as a natural and secure fermentation source may be combined with other raw materials, such as herbs, vegetables, potatoes, spices, to create a combined concept of different ingredients which is natural, energy-saving and stable in storage. The process concept may as such also function as sterilization when spices and herbs are admixed. Today known technology for this is evaporation, irradiation. The technique to create a combined concept of onion fibre mixture and/or onion juice and other ingredients according to above may be made directly into the feeding to the disintegrator or in/after the onion fibre dewater device into the onion fibre mixture or the separated onion juice. This combined concept according to above may also be created by admixing in the fermentors, in connection with filling of storage vessels or transportation containers.

The process according to the present invention further enables a hygienic dosage of the onion fibre and/or the onion juice for the user by the fact that these normally may be made pumpable from the storage container or transportation container to a desired dosage point or dosage station.

As is evident from the description above, the start material which is processed according to the present invention is fresh onion, however also onion which has been stored for some time. According to one specific embodiment of the present invention, the onions processed are of any kind of onion or a mixture of different types of onions. Such different types of possible onions are e.g. yellow onion, red onion, white onion, pearl onion, shallotot, and, spring onion. According to one specific embodiment, the onions processed are yellow onion.

As is evident from the description above, the onion fibre mixture produced according to the present invention and/or the separated onion juice may be used in different food applications. Examples of foodstuffs which are suitable to produce when the onion fibre mixture and/or the onion juice are used are processed food products, such as processed meats, sauces and soups, and also dairy products, such as cheese or spread. Examples of processed meat products are e.g. emulsion sausage, cold smoked sausage, uncooked sausage, liver products, etc.

An onion fibre mixture which has been produced according to the present invention, based on yellow onion, has a flavour intensity so large that the dosage of this may be decreased to about a fourth (in weight) in comparison to the amount of frozen onion. Furthermore, an onion fibre mixture which has been produced according to the present invention gives a better texture, which implies a better consistence or "bite" in foodstuffs.

When an onion fibre material which has been produced according to the present invention is mixed in water, a clear solution is obtained where the well-defined fibre particles of the mixture or material have settled on the bottom. When finally chopped deep-frozen onion is mixed in water, a turbid solution without well-defined particles is however obtained. The onion fibre mixture according to the present invention also have the advantage that it, contrary to a dried flavour additive material, such as dried onion, does not want to absorb moisture which increases the risk for mould development.

An onion fibre material or an onion fibre mixture which has been produced according to the present invention is stable in storage at a temperature of 2-10°C and has a long shelf life in these temperature conditions. When the onion fibre mixture is cool stored at 2-10°C, the onion fibre mixture is stable in storage at least up to 6 months. Also the fermented separated onion juice is stable in storage a long time, but the cooling of this should be kept at a low temperature level during storage due to the fact that it normally does not have an equally low pH-value as the fermented onion fibre mixture.

To summarize, it should be said that the fermented onion fibre mixture which may be produced according to the present invention is user-friendly, has enhanced properties and is cheap to produce in comparison with the alternatives existing on the market today, which implies that it is cost effective for a user. Furthermore, the onion fibre mixture which is produced is user-rational due to the fact that it demands lower dosage levels, it is environment and climate optimal and it is produced without additives ("clean label"). Moreover, the process according to the present invention gives several advantages in comparison with state of the art, such as a cost effective production of a storage stable onion fibre mixture with advantages according to above and a fermented separated onion juice, which preferably may be used together as a combined concept, e.g. together with herbs, vegetables, potatoes, spices, and in food applications for the production of different foodstuffs, such as e.g. processed meat products.

### Examples

### Detailed description of the drawing and related trials and results

Fig 1 shows a process chart for the processing of fresh onion according to one specific embodiment of the present invention. Fresh onion or onion which has been stored e.g. up to 6 months is fed into the process. According to this specific example, 100 kg fresh onion is fed. Defect onions and stones, soil and possible foliage have already been removed during a dry removal. This step is not shown in fig 1 which only illustrates the wet steps in the onion processing. The fed dry removed onion of course contains peel and dirt and possible contaminants. The peel of the onions is removed in a so called onion peeler where the onions also are washed to remove and separate dirt. As is shown in table 1 below, the dry rinsed, unwashed and unpeeled onion has about 11-15 weight% dry matter (DM), usually 12-13.5 weight%, while the washed and peeled onion has 10-14 weight% DM, usually 11.5-13 weight% DM.

After this step, according to the example, about 90-95 kg peeled onion remains, which is fed into an onion disintegrator which disintegrates the onions. The onions are disintegrated without destroying or breaking the cell structure of the fibres. Thereafter, the disintegrated mixture is fed into an onion fibre dewater device for the separation of onion fibre mixture from a part of onion juice. One example of equipment which may be used for this step is different types of centrifuges. By separating away the onion juice which also contains water soluble fibres, the water insoluble onion fibres may be concentrated in the so called onion fibre mixture. As is shown in table 1 below, the portion of dry matter in the onion fibre mixture therefore also is considerably higher than in the onion juice. Dependent on how this removal is performed, the onion fibre mixture may comprise about 40-80 kg and the onion juice about 15-55 kg, i.e. according to this example with a start material of 100 kg. Both the onion fibre mixture and the onion juice are then fed to separate fermentors for fermentation of these to achieve stability in storage.

**Table 1**

| **Onion** | **Dry matter %** |
|---|---|
| Dry rinsed, unwashed and unpeeled | 11-15 %, usually 12-13.5% |
| Washed and peeled | 10-14 %, usually 11.5-13% |
| Disintegrated onion | 10-14%, usually 11-13% |
| Onion fibre mixture | 11-16%, usually 11.5-14.5% |
| Onion juice | 7-10%, usually 7.5-9.5% |

As is shown in fig 1, in this case two fermentors are installed for both the onion fibre mixture and the onion juice for secure fermentation. The fermentor operation may e.g. be run according to the following: Fermentor 1 is filled during about 1 day and night and thereafter change is made to fermentor 2. Before the next change for return to fermentor 1, this one is emptied and cleaned. Thereafter refilling is started of the fermentor and the process is run forward.

As an effective alternative for the fermentation of the onion fibre mixture, the onion fibre is stored about 24 hours in a temperature of about 25°C, and the pH-value then decreases from about 6 to 4. When the onion juice undergoes the same fermentation process with the same conditions as above, the pH-value of this decreases to about 5-5.5. Hence, the onion juice does not reach the same pH-value as the onion fibre mixture and is as such more difficult to store over time and therefore demands a more stable temperature storage and cool handling towards the customer.

Microbiological, onion processed according to above has a total bacteria level significantly exceeding 100 000 from the beginning, which after fermentation one day and night is at a level of 10 000-15 000. After the fermentation and additionally storage about 6 days and nights at cooled conditions, the microbiological activity is at a level below 3 000.

After about 1 day and night or when the pH-value has decreased to about 4 for the onion fibre mixture and to about 5-5.5 for the onion juice, these products are transported further in a cooling process, such as is shown in fig 1, where they are cooled to a temperature below 8-10°C. With reference to this, a more stable temperature storage and cool handling of the onion juice is often demanded in view of its higher pH-value.

Table 2 below specifies the content of dry matter and pH-values for different fermented mixtures of onion fibre mixture and onion juice and how the pH-values are changed during storage and as stored onion products. In this case the pH-values for the stored onion products are measured on respective mixtures after about 1 week of storage at cooling temperatures given above, i.e. 2-10°C. The different mixtures which have been evaluated are non-dewatered mixture, i.e. a mixture comprising onion fibre and onion juice, an onion fibre mixture where 20-25 weight% onion juice has been removed (weight% calculated on total inflow weight of fresh unwashed and unpeeled onion as 100 weight%), called batch 1, an onion fibre mixture where 45-55 weight% onion juice has been removed (weight% based on total inflow weight of fresh unwashed and unpeeled onion as 100 weight%), called batch 2, and for onion juices which have been removed during different trials with removal according to batch 1 and batch 2. Different trials have been performed with level of removal according to batch 1 and batch 2, respectively, and the mean values for these trials are presented in table 2 below.

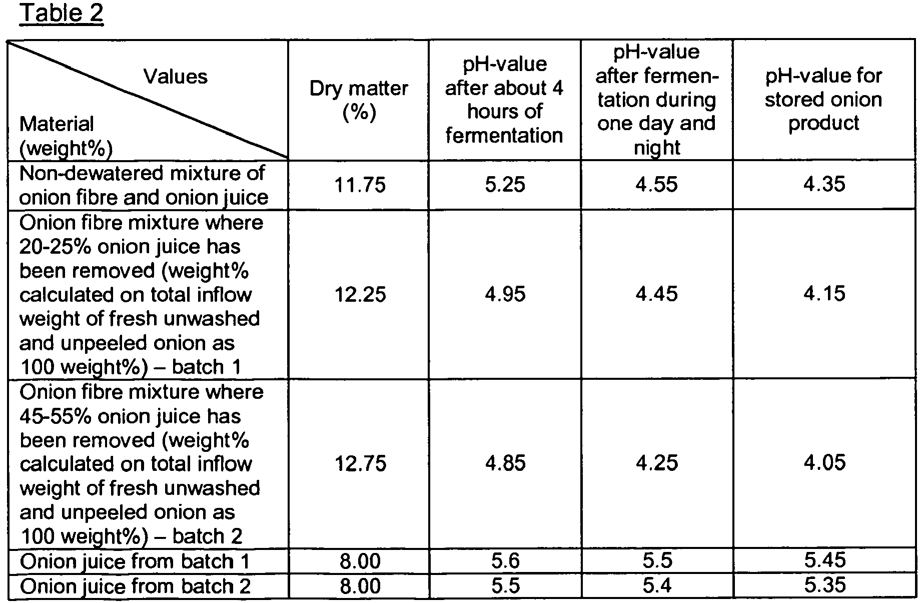

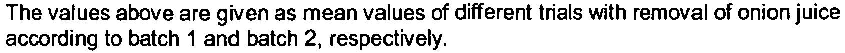

As may be seen in table 2, the proportion of dry matter increases when onion juice is separated away from the mixture comprising onion fibres and onion juice. Compatible with this, the proportion of dry matter in the separated onion juice is lower than in the start material mixture obtained after disintegration in the onion disintegrator. Furthermore, it is clear that the pH-values are lower for the fermented onion fibre mixtures than for the fermented removed onion juices after both 4 hours fermentation and fermentation during one day and night and also as stored products. Additionally, the pH-values for the fermented onion fibre mixture with lower proportion of onion juice remaining, i.e. according to batch 2, are lower than the pH-values for trials according to batch 1 in which a minor proportion of onion juice has been separated away before fermentation.

## Claims

1. Process for the production of a storage stable onion fibre mixture from onion, comprising the steps of:
- dry removal and sorting-away of soil, stones, defect material and any other contaminants and foliage from onions;
- washing and peeling of the onions in a washer/onion peeler;
- disintegration of the onions to a mixture comprising small onion fibres which have intact fibre structure and onion juice in an onion disintegrator;
- separation of 15-55% onion juice, based on total weight of fresh onion input, from the mixture in an onion fibre dewater device for the production of an onion fibre mixture; and
- fermentation of the onion fibre mixture in at least one fermentor to a pH-value between 3.5 and 4.5 for the production of a storage stable onion fibre mixture and optionally fermentation of the separated onion juice in at least one separate fermentor to a pH-value between 5 and 6,
wherein the process is performed naturally without additives.

2. Process according to claim 1, wherein the fermentation of the onion fibre mixture and/or the natural fermentation of the onion juice are performed in at least two fermentors each for secure continuous natural fermentation.

3. Process according to claim 1 or 2, wherein the fermentation of the onion fibre mixture and/or the natural fermentation of the separated onion juice are performed in a temperature of between 15°C and 30°C.

4. Process according to anyone of claims 1-3, wherein the fermentation of the onion fibre mixture and/or the natural fermentation of the separated onion juice are performed from 15 hours to 30 hours each.

5. Process according to anyone of claims 1-4, wherein the fermentation of the onion fibre mixture is performed to a pH-value of between 3.8 and 4.5 and/or the fermentation of the separated onion juice is performed to a pH-value of between 5 and 5.5.

6. Process according to anyone of the preceding claim, wherein the storage stable onion fibre mixture after fermentation and/or the separated onion juice after fermentation are cooled to a temperature of between 2°C and 10°C.

7. Process according to anyone of the preceding claims, wherein a certain amount of the separated onion juice, after fermentation to a pH-value between 5 and 6, is recirculated to the inflow of washed and peeled onion or the mixture comprising small onion fibres, after the step of washing and peeling of the onions in a washer/onion peeler and before the step of separation of at least a part of the onion juice from the mixture in an onion fibre dewater device for the production of an onion fibre mixture.

8. Process according to anyone of the preceding claims, wherein the onions processed are of any type of onion or a mixture of different types of onions.

9. Process according to anyone of the preceding claims, wherein the onions processed are yellow onion.

## Patentansprüche

1. Verfahren zum Herstellen eines lagerungsstabilen Zwiebelfasergemischs aus Zwiebel, umfassend die Schritte:
- trockenes Entfernen und Aussortieren von Erde, Steinen, Defektmaterial und anderen Verunreinigungen sowie Blattwerk von Zwiebeln;
- Waschen und Schälen der Zwiebeln in einer Wasch-/Zwiebelschäl-Vorrichtung;
- Zerteilen der Zwiebeln zu einem Gemisch, umfassend kleine Zwiebelfasern, die eine intakte Faserstruktur aufweisen, und Zwiebelsaft in einem Zwiebelzerteiler;
- Abtrennen von 15-55 % Zwiebelsaft, bezogen auf das Gesamtgewicht der Zufuhr von frischen 2wiebeln, aus dem Gemisch in einer Zwiebelfaser-Entwässerungsvorrichtung zum Herstellen eines Zwiebelfasergemischs; und
- Fermentieren des Zwiebelfasergemischs in wenigstens einem Fermenter auf einen pH-Wert zwischen 3,5 und 4,5 zum Herstellen eines lagerungsstabilen Zwiebelfasergemischs und gegebenenfalls Fermentieren des abgetrennten Zwiebelsafts in wenigstens einem getrennten Fermenter auf einen pH-Wert zwischen 5 und 6,
wobei das Verfahren natürlich, ohne Zusatzstoffe durchgeführt wird.

2. Verfahren gemäß Anspruch 1, wobei die Fermentation des Zwiebelfasergemischs und/oder die natürliche Fermentation des Zwiebelsafts in wenigstens zwei Fermentern durchgeführt wird, jeder für eine sichere, kontinuierliche, natürliche Fermentation.

3. Verfahren gemäß Anspruch 1 oder 2, wobei die Fermentation des Zwiebelfasergemischs und/oder die natürliche Fermentation des abgetrennten Zwiebelsafts bei einer Temperatur zwischen 15 °C und 30 °C durchgeführt wird.

4. Verfahren gemäß einem der Ansprüche 1-3, wobei die Fermentation des Zwiebelfasergemischs und/oder die natürliche Fermentation des abgetrennten Zwiebelsafts jeweils 15 Stunden bis 30 Stunden durchgeführt wird.

5. Verfahren gemäß einem der Ansprüche 1-4, wobei die Fermentation des Zwiebelfasergemischs auf einen pH-Wert zwischen 3,8 und 4,5 durchgeführt wird und/oder die Fermentation des abgetrennten Zwiebelsafts auf einen pH-Wert zwischen 5 und 5,5 durchgeführt wird.

6. Verfahren gemäß einem der vorstehenden Ansprüche, wobei das lagerungsstabile Zwiebelfasergemisch nach der Fermentation und/oder der abgetrennte Zwiebelsaft nach der Fermentation auf eine Temperatur zwischen 2 °C und 10 °C abgekühlt werden.

7. Verfahren gemäß einem der vorstehenden Ansprüche, wobei eine bestimmte Menge des abgetrennten Zwiebelsafts nach der Fermentation auf einen pH-Wert zwischen 5 und 6 in die Zufuhr von gewaschenen und geschälten Zwiebeln oder in das Gemisch, das kleine Zwiebelfasern umfasst, nach dem Schritt des Waschens und Schälens der Zwiebeln in einer Wasch-/Zwiebelschälvorrichtung und vor dem Schritt des Abtrennens von wenigstens einem Teil des Zwiebelsafts von dem Gemisch in einer Zwiebelsaft-Entwässerungsvorrichtung für die Herstellung eines Zwiebelfasergemischs zurückgeführt wird.

8. Verfahren gemäß einem der vorstehenden Ansprüche, wobei die verarbeiteten Zwiebeln von einem beliebigen Typ von Zwiebeln oder ein Gemisch von verschiedenen Typen von Zwiebeln sind.

9. Verfahren gemäß einem der vorstehenden Ansprüche, wobei die verarbeiteten Zwiebeln gelbe Zwiebeln sind.

## Revendications

1. Procédé de production d'un mélange de fibres d'oignon stable au stockage, issu d'oignon, comprenant les étapes consistant à :
- éliminer à sec et trier le sol, les cailloux, le matériau défectueux et tout autre contaminant, et le feuillage des oignons ;
- laver et peler les oignons dans un laveur/peleuse d'oignons ;
- désintégrer les oignons en un mélange comprenant de petites fibres d'oignons ayant une structure fibreuse intacte et du jus d'oignons dans un désintégrateur d'oignons ;
- séparer 15-55% de jus d'oignon, sur la base du poids total d'intrants d'oignon frais, du mélange dans un dispositif de déshydratation des fibres d'oignon, pour la production d'un mélange de fibres d'oignon ; et
- fermenter le mélange de fibres d'oignon dans au moins un fermenteur jusqu'à une valeur de pH comprise entre 3,5 et 4,5, pour la production d'un mélange de fibres d'oignon stable au stockage, et éventuellement fermenter le jus d'oignon séparé dans au moins un fermenteur séparé jusqu'à une valeur de pH comprise entre 5 et 6,
où le procédé est réalisé naturellement sans additifs.

2. Procédé selon la revendication 1, dans lequel la fermentation du mélange de fibres d'oignon et/ou la fermentation naturelle du jus d'oignon sont réalisées dans au moins deux fermenteurs chacune afin de garantir une fermentation naturelle continue.

3. Procédé selon la revendication 1 ou 2, dans lequel la fermentation du mélange de fibres d'oignon et/ou la fermentation naturelle du jus d'oignon séparé sont réalisées à une température comprise entre 15°C et 30°C.

4. Procédé selon l'une quelconque des revendications 1-3, dans lequel la fermentation du mélange de fibres d'oignon et/ou la fermentation naturelle du jus d'oignon séparé sont réalisées de 15 heures à 30 heures chacune.

5. Procédé selon l'une quelconque des revendications 1-4, dans lequel la fermentation du mélange de fibres d'oignon est réalisée jusqu'à une valeur de pH comprise entre 3,8 et 4,5 et/ou la fermentation du jus d'oignon séparé est réalisée jusqu'à une valeur de pH comprise entre 5 et 5,5.

6. Procédé selon l'une quelconque des revendications précédentes, dans lequel le mélange de fibres d'oignon stable au stockage après fermentation et/ou le jus d'oignon séparé après fermentation sont refroidis jusqu'à une température comprise entre 2°C et 10°C.

7. Procédé selon l'une quelconque des revendications précédentes, dans lequel une certaine quantité du jus d'oignon séparé, après fermentation jusqu'à une valeur de pH comprise entre 5 et 6, est recirculée vers le débit entrant d'oignon lavé et pelé ou le mélange comprenant de petites fibres d'oignon, après l'étape consistant à laver et peler les oignons dans un laveur/peleuse d'oignons, et avant l'étape consistant à séparer au moins une partie du jus d'oignon du mélange dans un dispositif de déshydratation des fibres d'oignon, pour la production d'un mélange de fibres d'oignon.

8. Procédé selon l'une quelconque des revendications précédentes, dans lequel les oignons traités appartiennent à un type quelconque d'oignon ou sont un mélange de différents types d'oignon.

9. Procédé selon l'une quelconque des revendications précédentes, dans lequel les oignons traités sont des oignons jaunes.
